# EUROPÄISCHE PATENTANMELDUNG

(11) **EP 3 736 925 A1**
(43) Veröffentlichungstag der Anmeldung: **11.11.2020**
(21) Anmeldenummer: 19173549.7
(22) Anmeldetag: 09.05.2019
(51) Int. Cl.: H02B 1/38, H02B 3/00

(54) **TRANSPORTKLEMME FÜR SCHALTSCHRANKTÜREN**

(71) Anmelder: Blumenbecker Automatisierungstechnik GmbH, 59269 Beckum (DE)
(72) Erfinder: Die Erfindernennung liegt noch nicht vor
(74) Vertreter: Limbeck, Achim

(57) **Zusammenfassung**

Die vorliegende Erfindung betrifft eine Transporteinrichtung (1) für eine Schaltschranktür (2), welche zu Lager- und/oder Transportzwecke in ausgebauter Lage an einer Wandung (30) eines Schaltschrank (3) reversibel anordbar ist. Der Erfindung liegt die Aufgabe zugrunde, eine Transporteinrichtung zu schaffen, mittels der der Platzbedarf zum Transportieren und/oder Lagern einer Schaltschranktür (2) auf die Fläche des Schaltschrankes (3) reduziert bleibt, die Zuordnung der Schaltschranktür (2) eindeutig dem Auftrag zuzuweisen ist und die prozesssicher ist. Hierzu umfasst die erfindungsgemäße Transporteinrichtung (1) zumindest ein die Schaltschranktür (2) an dem Schaltschrank (3) reversibel fixierendes Haltemittel (10) umfasst, welches wenigstens ein an dem Schaltschrank (3) reversibel befestigbares Halteelement (100) sowie wenigstens ein vom Schaltschrank (3) wegragendes und die Schaltschranktür (2) überragendes Halteelement (101) umfasst, wobei die Halteelemente (100, 101) miteinander verbunden sind.

## Beschreibung

### Technisches Gebiet

Die vorliegende Erfindung betrifft eine Transporteinrichtung gemäß dem Oberbegriff des Patentanspruchs 1.

### Stand der Technik

Gemäß dem Stand der Technik werden Schaltschranktüren separat in einem Lagerbereich gelagert und zur finalen Fertigstellung des Schrankes geholt und verbaut. Dies bedeutet Zeitverlust durch unnötige Wege sowie das Aufsuchen der Schaltschranktüren und die Gefahr einer Vertauschung. Alternativ sind spezielle Türwagen bekannt, in denen die Schaltschranktüren kommissionsgebunden liegen. Diese weisen allerdings die Ausmaße einer Europalette für max. 6-8 Türen auf und benötigen hierdurch unnötig Platz im Lager oder Produktionsbereich.

### Darstellung der Erfindung

Der vorliegenden Erfindung liegt die Aufgabe zugrunde, eine Transporteinrichtung zu schaffen, mittels der die vorliegenden Nachteile ausgeräumt werden können und mittels der der Platzbedarf der Schaltschranktür auf die Fläche des Schaltschrankes reduziert bleibt, die Zuordnung der Schaltschranktür eindeutig dem Auftrag zuzuweisen ist und die prozesssicher ist.

Erfindungsgemäß wird die voranstehende Aufgabe gemäß dem Oberbegriff des Anspruchs 1 in Verbindung mit den kennzeichnenden Merkmalen gelöst.

Vorteilhafte Ausgestaltungen und Weiterbildungen der erfindungsgemäßen Transporteinrichtung sind in den abhängigen Unteransprüchen angegeben.

Erfindungsgemäß ist eine Transporteinrichtung der eingangs genannten Art dadurch gekennzeichnet, dass sie zumindest ein die Schaltschranktür an dem Schaltschrank reversibel fixierendes Haltemittel umfasst, welches wenigstens ein an dem Schaltschrank reversibel befestigbares Halteelement sowie wenigstens ein vom Schaltschrank wegragendes und die Schaltschranktür überragendes Halteelement umfasst, wobei die Halteelemente miteinander verbunden sind.

### Kurzbeschreibung der Zeichnungen

Weitere Ziele, Merkmale, Vorteile und Anwendungsmöglichkeiten der erfindungsgemäßen Transporteinrichtung ergeben sich aus der nachfolgenden Beschreibung eines Ausführungsbeispiels anhand der Zeichnungen. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

### In den Zeichnungen zeigen

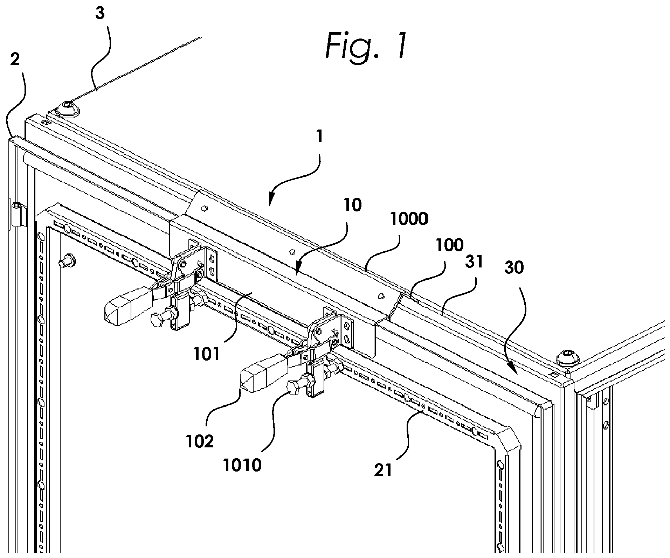

Fig. 1 die erfindungsgemäße Transporteinrichtung in einer perspektischen Ansicht an einem Schaltschrank sowie einer Schaltschranktür.

### Ausführung der Erfindung

Wie aus Fig. 1 ersichtlich, dient die erfindungsgemäße Transporteinrichtung 1 der reversiblen Fixierung einer Schaltschranktür 2, welche zu Lager- und/oder Transportzwecke in ausgebauter Lage an einer Wandung 30 eines Schaltschrank 3 reversibel angeordnet bzw. anordbar ist.

Es können je nach Anforderung in der Praxis und Ausgestaltung eines Schaltschranks 3 gemäß der vorliegenden Erfindung sowohl ein als auch mehrere Schaltschranktüren 2 mittels einer oder mehrerer Transporteinrichtungen 1 an einem Schaltschrank 3 angeordnet werden.

Das Halteelement 100 der erfindungsgemäßen Transporteinrichtung 1 greift gemäß Fig. 1 vorteilhafterweise in mindestens eine sich in Längs- oder Querrichtung des Schaltschranks 3 erstreckende Vertiefung 31 oder Erhöhung kraftschlüssig und/oder formschlüssig ein.

Alternativ können an dem Schaltschrank 3 auch andere Mittel vorgesehen sein, mittels der das an dem Schaltschrank 3 reversibel befestigbare Halteelement 100 kraft- und/oder formschlüssig Halt finden kann. Hierzu können an den Schaltschrank sowie an dem Halteelement 100 vorteilhafterweise reversible Verbindungsmittel jeglicher Ausformung vorgesehen sein wie bspw. klemm-, haken-, rast-, schnapp- oder dergleichen ausgebildete reversible Verbindungen.

Das Halteelement 100 umfasst in einer vorteilhaften Ausführungsform der Erfindung mindestens ein Winkelprofil 1000, wobei das mindestens eine Winkelprofil 1000 vorzugsweise mit zumindest einer Kantung 10001 in eine Vertiefung 31 oder Erhöhung des Schaltschranks 3 eingreift.

Darüber hinaus kann es vorteilhaft sein, dass das mindestens eine Winkelprofil 1000 mit zumindest einer Kantung 10002 die Schaltschranktür 2 von der zum Schaltschrank 3 gerichteten Seite zumindest bereichsweise hintergreift und/oder dass das mindestens eine Winkelprofil 1000 mit zumindest einer Kantung 10003 die Schaltschranktür 2 überragt.

Weiterhin können vorzugsweise mehrere Winkelprofile 1000 zur Bildung der Kantungen 10001, 10003 vorgesehen sein, die mit mindestens einer Kantung 10004, 10005 reversibel oder irreversibel miteinander flächig anliegend verbunden sind.

Weiterhin sieht eine vorteilhafte Ausführungsform der Erfindung vor, dass das Halteelement 101 mindestens ein in ein Rahmenprofil 21 der Schaltschranktür 2 kraftschlüssig und/oder formschlüssig eingreifendes Befestigungsmittel 1010 umfasst. Das Befestigungsmittel 1010 umfasst vorzugsweise eine Schraubverbindung.

In einer ganz besonders vorteilhaften Ausführungsform der Erfindung sind die Halteelemente 100, 101 über wenigstens ein Winkel-Spannelement 102 miteinander verbunden. Das Winkel-Spannelement 102 ist dabei vorteilhafterweise an einem Winkelprofil 10003 angeordnet.

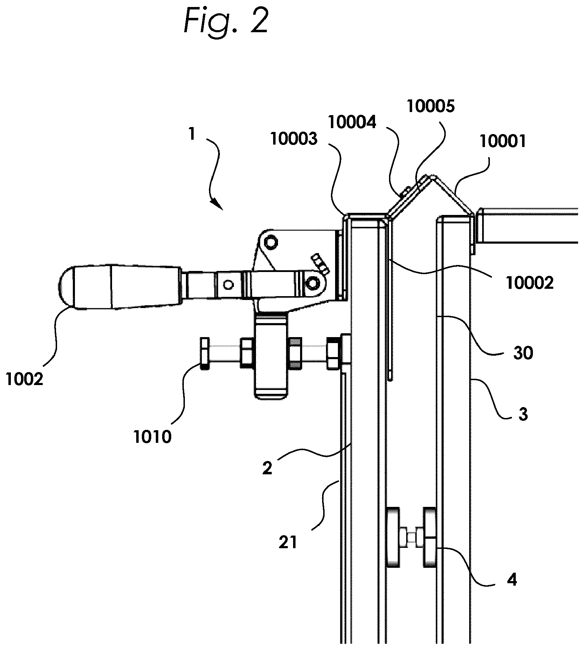

Wie aus Fig. 2 ersichtlich, kann zwischen Wandung 30 und der Schaltschranktür auch zusätzlich Abstandhalter 4 vorgesehen sein, so dass die Schaltschranktür 2 nicht direkt (flächig) an der Wandung anliegt, sondern auf Abstand an dieser angeordnet ist.

Die erfindungsgemäße Transporteinrichtung 1 beschränkt sich in ihrer Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

### Liste der Bezugsziffern

- 1: Transporteinrichtung
- 2: Schaltschranktür
- 3: Schaltschrank
- 4: Abstandhalter
- 10: reversibel fixierendes Haltemittel
- 21: Rahmenprofil an der Schaltschranktür
- 30: Wandung des Schaltschranks
- 31: Vertiefung am Schaltschrank
- 100: erstes reversibel befestigbares Halteelement
- 101: zweites Halteelement
- 102: Winkel-Spannelement
- 1000: Winkelprofil
- 1010: Befestigungsmittel am zweiten Halteelement
- 10001-10005: Kantungen am Winkelprofil

## Patentansprüche

1. Transporteinrichtung (1) für eine Schaltschranktür (2), welche zu Lager- und/oder Transportzwecke in ausgebauter Lage an einer Wandung (30) eines Schaltschranks (3) reversibel anordbar ist,
**dadurch gekennzeichnet, dass**
die Transporteinrichtung (1) zumindest ein die Schaltschranktür (2) an dem Schaltschrank (3) reversibel fixierendes Haltemittel (10) umfasst, welches wenigstens ein an dem Schaltschrank (3) reversibel befestigbares Halteelement (100) sowie wenigstens ein vom Schaltschrank (3) wegragendes und die Schaltschranktür (2) überragendes Halteelement (101) umfasst, wobei die Halteelemente (100, 101) miteinander verbunden sind.

2. Transporteinrichtung (1) nach Anspruch 1,
**dadurch gekennzeichnet, dass**
das Halteelement (100) in mindestens eine sich in Längs- oder Querrichtung des Schaltschranks (3) erstreckende Vertiefung (31) oder Erhöhung kraftschlüssig und/oder formschlüssig eingreift.

3. Transporteinrichtung (1) nach Anspruch 2,
**dadurch gekennzeichnet, dass**
das Halteelement (100) mindestens ein Winkelprofil (1000) umfasst.

4. Transporteinrichtung (1) nach Anspruch 3,
**dadurch gekennzeichnet, dass**
das mindestens eine Winkelprofil (1000) mit zumindest einer Kantung (10001) in die Vertiefung (31) oder Erhöhung des Schaltschranks (3) eingreift.

5. Transporteinrichtung (1) nach einem der vorangegangenen Ansprüche 3 oder 4, **dadurch gekennzeichnet, dass**
das mindestens eine Winkelprofil (1000) mit zumindest einer Kantung (10002) die Schaltschranktür (2) von der zum Schaltschrank (3) gerichteten Seite zumindest bereichsweise hintergreift.

6. Transporteinrichtung (1) nach einem der vorangegangenen Ansprüche 3 oder 5, **dadurch gekennzeichnet, dass**
das mindestens eine Winkelprofil (1000) mit zumindest einer Kantung (10003) die Schaltschranktür (2) überragt.

7. Transporteinrichtung (1) nach einem der vorangegangenen Ansprüche, **dadurch gekennzeichnet, dass**
das Halteelement (101) mindestens ein in ein Rahmenprofil (21) der Schaltschranktür (2) kraftschlüssig und/oder formschlüssig eingreifendes Befestigungsmittel (1010) umfasst.

8. Transporteinrichtung (1) nach einem der vorangegangenen Ansprüche, **dadurch gekennzeichnet, dass**
die Halteelemente (100, 101) über wenigstens ein Winkel-Spannelement (102) miteinander verbunden sind.

9. Transporteinrichtung (1) nach einem der vorangegangenen Ansprüche, **dadurch gekennzeichnet, dass**
mehrere Winkelprofile (1000) zur Bildung der Kantungen (10001, 10003) vorgesehen sind, die mit mindestens einer Kantung (10004, 10005) reversibel oder irreversibel miteinander flächig anliegend verbunden sind.

10. Transporteinrichtung (1) nach einem der vorangegangenen Ansprüche, **dadurch gekennzeichnet, dass**
das Winkel-Spannelement (102) an einem Winkelprofil (10003) angeordnet ist.

11. Transporteinrichtung (1) nach Anspruch 7,
**dadurch gekennzeichnet, dass**
das Befestigungsmittel (1010) eine Schraubverbindung umfasst.
